# EUROPÄISCHE PATENTSCHRIFT

(11) **EP 0 687 211 B1**
(45) Veröffentlichungstag und Bekanntmachung des Hinweises auf die Patenterteilung: **12.03.1997**
(21) Anmeldenummer: 94908268.9
(22) Anmeldetag: 23.02.1994
(51) Int. Cl.: B23K 11/25, B25J 9/16

(54) **SCHWEISSZANGENREGELUNG**
WELDING ELECTRODE HOLDER CONTROL
SYSTEME DE REGULATION POUR PINCE PORTE-ELECTRODES

(30) Priorität: 03.03.1993 DE 4306492
(43) Veröffentlichungstag der Anmeldung: 20.12.1995
(73) Patentinhaber: Rennau, Wolfram, Dr., 52076 Aachen (DE)
(72) Erfinder: Rennau, Wolfram, Dr., 52076 Aachen (DE)
(74) Vertreter: Kohlmann, Kai, Dipl.-Ing.
(86) Internationale Anmeldenummer: DE9400210
(87) Internationale Veröffentlichungsnummer: WO9420254

(56) Entgegenhaltungen:
- GB-A- 2 214 119
- GB-A- 2 261 081
- US-A- 5 111 020
- VDI-ZEITSCHRIFT, Nr.1, 1989, DüSSELDORF ( DE ) Seiten 8 - 14, XP000031868 JOACHIM ZUMBRÄGEL 'Servopneumatik als Schnittstelle zwischen Elektronik und Mechanik'

## Beschreibung

Die Erfindung betrifft eine Regelungsanordnung für eine Schweißzange, im folgenden kurz Regelung genannt, insbesondere für den Einsatz an einem Schweißroboter, mit einem servoventilgesteuerten Antrieb für die Schweißelektroden und einer elektronischen Steuerung für die Servoventile.

Derartige Schweißzangen werden insbesondere beim automatisierten Widerstandsschweißen eingesetzt und dienen vor allem zum Verbinden von Blechteilen. Die aufeinanderliegenden Flächen werden dabei in der Regel mit stiftförmigen Elektroden, wenn Punkte geschweißt werden sollen, oder mit Rollenelektroden für Nähte verschweißt.

Stand der Technik sind Schweißzangen, deren Schweißelektroden mit einem pneumatischen Antrieb zwischen den Endstellungen verfahren werden können. Mittels eines auf den Luftzylinder wirkenden Druckservoventils ist eine Beeinflussung des Elektrodendrucks möglich. Das Druckservoventil reduziert den im Netz vorliegenden, externen Versorgungsdruck auf den gewünschten variablen Enddruck. Um die Elektroden mit dem Luftzylinder in seine Endstellungen fahren zu können, wird jeweils eine der beiden Zylinderseiten komplett entlüftet, während die Gegenseite komplett belüftet wird. Nach dem Verfahren des Luftzylinders in die geschlossene Endstellung wird nach einer programmierbaren Vorpreßzeit der Schweißvorgang eingeleitet. Die Vorpreßzeit dient dem Druckaufbau. Es wird davon ausgegangen, daß nach Ablauf dieser Zeit ein zumindest erforderlicher Prozentsatz des Schweißenddruckes erreicht wurde. Diese Zeit wird immer möglichst knapp bemessen, weil sie die gesamte Zeit zur Herstellung eines Schweißpunktes verlängert. Erfolgt jedoch die Schweißung bevor der mindest erforderliche Enddruck erreicht ist, also zu früh, so führt dies dazu, daß aus dem Schweißwerkstück geschmolzenes Material mit großer Geschwindigkeit herausgedrückt wird (sogenannte Spritzerbildung), was die Schweißpunktqualität und ggf. die Oberfläche des Werkstücks negativ beeinflußt.

Die bekannte Regelung für eine Schweißzange besitzt darüber hinaus den Nachteil einer großen Geräuschentwicklung beim Aufeinandertreffen der Elektroden. Die hohe Geschwindigkeit der aufeinandertreffenden Elektroden bewirkt außerdem einen hohen Elektrodenverschleiß und eine große Belastung der Zangenmechanik. Darüber hinaus weisen die bekannten Regelungen für eine Schweißzange einen hohen Druckluftverbrauch auf, was zum einen bei schwachen Druckluftnetzen äußerst nachteilig ist und zum anderen einen hohen Energieverbrauch zur Folge hat.

Zur Behebung dieser Probleme hat man versucht, wassergekühlte Elektromotore als Antriebe für die Schweißelektroden einzusetzen, was jedoch wegen der mit den hohen Drücken verbundenen thermischen Probleme der elektrischen Antriebe sowie dem Aufwand der elektronischen Steuerungen nicht erfolgreich war.

Ferner wurden bereits programmierbare Steuerungen entwickelt, jedoch in erster Linie mit dem Ziel einer Steuerungsvereinfachung.

Aus der deutschen Offenlegungsschrift 3500806 ist eine programmierbare Steuerung für einen Industrie-Schweißrobotor, insbesondere ein Widerstandsschweißgerät mit integrierter Schweißsteuerung bekannt. Im Programmspeicher der eigentlichen Robotersteuerung sind auch die Schweißparameter niedergelegt, die zeitgerecht abrufbar und mittels einer speicherprogrammierbaren Steuerung in Zündbefehle für den Schweißstromsteller umsetzbar sind. Dieser Steuerung liegt insbesondere die Aufgabe zugrunde, die Steuerung des Widerstandsschweißstromes zu vereinfachen.

Ferner gehen aus "Fortschritte in der Prozeßdatenerfassung und Prozeßdatenverarbeitung beim Widerstandspreßschweißen", B. Lehmkuhl/H. Preß/M. Römer/G. Weber, in: "Schweißen und Schneiden", 42 (1990), Heft 1, Seiten 26-29" die üblichen Prozeßgrößen beim Widerstandsschweißen und dafür geeignete Meßwertaufnehmer, insbesondere für die Elektrodenkraft, die Beschleunigung, den Weg sowie den Schweißstrom und die Elektrodenspannung hervor.

Darüber hinaus ist aus der deutschen Offenlegungsschrift 2915442 ein verfahren zum Aufsetzen der Elektrode eines Widerstandsschweißgerätes auf das Werkstück bekannt, mit dem das Aufsetzen im wesentlichen drucklos erfolgt und der Elektrodenkraftaufbau ohne kinematische Verfälschung sichergestellt ist. Hierzu wird gemäß der deutschen Offenlegungsschrift 2915442 vorgeschlagen, daß die Elektrodenbewegungen durch aufeinanderfolgende Beaufschlagung zweier in Reihe angeordneter Kolben erfolgt.

Aus der deutschen Patentschrift 3612502 ist ein für den Antrieb von Roboterpunktschweißern geeigneter pneumatisch betätigbarer Schweißzylinder bekannt, der durch seine spezielle Bauweise einen Vor- und Arbeitshub ermöglicht.

Die US-A-5 111 020 betrifft eine Regelungsanordnung für eine Schweißzange. Zur Kontrolle und Steuerung eines Widerstandsschweißgerätes wird bei der Anordnung nach der US-A-5 111 020 die Verformung der Elektrodenarme während des Schweißvorganges erfaßt. Die Elektrodenarme werden durch eine thermisch bedingte Ausdehnung bzw. Zusammenziehung des Schweißpunktes während des Schweißvorganges verformt. Die Elektrodenverformung wird in ein analoges Signal gewandelt. Basierend auf dem analogen Signal wird über einen Computer im Regelfall der Schweißstrom unterbrochen, wenn die Elektroden sich nicht weiter bewegen. Sodann gibt ein Schweißcontroller ein Signal zu einem Controller für den Roboter, daß der Schweißpunkt fertig ist. Ein die Schweißarme antreibender Zylinder wird entlüftet und die Schweißelektroden öffnen, so daß der Controller des Roboters den nächsten Schweißpunkt anfahren kann.

Ausgehend von diesem Stand der Technik liegt der Erfindung die Aufgabe zugrunde, eine Regelung für eine Schweißzange zu schaffen, bei der das Geräusch beim Aufeinandertreffen der Schweißelektroden erheblich vermindert ist, die längere Standzeiten der Schweißelektroden, eine geringere Belastung der Zangenmechanik und eine Verkürzung der gesamten Schweißzeit gewährleistet.

Ferner liegt der Erfindung die Aufgabe zugrunde, Ausgestaltungen für eine erfindungsgemäße Regelung zu schaffen, die einen geringeren Druckluftverbrauch sowie die Vermeidung von Spritzern ermöglichen.

Die Lösung basiert auf dem Gedanken, den Schweißzyklus in verschiedene Arbeitsphasen zu unterteilen, denen bestimmte Solldaten zugeordnet werden.

Im einzelnen wird die Aufgabe dadurch gelöst, daß eine Regelung für eine Schweißzange der eingangs erwähnten Art
- mindestens einen Meßwertaufnehmer für Istdaten des Schweißvorganges sowie eine Schnittstelle für die Meßwerte zu einer Rechnereinheit,
- mindestens zwei Servoventile für den Antrieb,
- ein auf der Rechnereinheit laufendes Zangenprogramm, mit dem die Solldaten des Schweißvorganges frei vorwählbar sind und
- eine Signale von der Rechnereinheit an die Servoventile leitende Schnittstelle besitzt.

Mittels des auf der Rechnereinheit laufenden Zangenprogramms lassen sich die zu den einzelnen Arbeitsphasen zugehörigen Solldaten frei vorwählen. Der über Meßwertaufnehmer sowie das Zangenprogramm ablaufende Soll-Istvergleich erlaubt im Zusammenhang mit der Schnittstelle für die Servoventile eine präzise Abarbeitung der vorwählbaren Arbeitsphasen. Hierdurch läßt sich das Aufeinandertreffen der Elektroden mit großer Geschwindigkeit und damit die Entstehung großer Kräfte vermeiden, wodurch die Geräuschentwicklung erheblich eingedämmt und der Elektrodenverschleiß vermindert wird.

In vorteilhafter Ausgestaltung der Erfindung wird die Bewegung des Antriebs für die Schweißelektroden in folgende, frei vorwählbare und/oder optimierbare Abschnitte aufgeteilt:
- Vorhub öffnen-/schließen, wobei damit diejenige Bewegung der Schweißelektroden zwischen einer geöffneten Position VORHUB_ZUR in Richtung auf das Schweißwerkstück gemeint ist, die jedoch in geringem Abstand (Position VORHUB_VOR) davor endet.
- Arbeitshub öffnen/schließen, wobei damit diejenige Bewegung der Schweißelektroden zwischen der Position VORHUB_VOR bis an das Werkstück heran gemeint ist, jedoch ohne dies zu berühren (ARBHUB_VOR). Die Programmierung eines solchen Arbeitshubes bewirkt, daß das Aufschlagen der Schweißelektroden auf das Schweißwerkstück vermieden wird. Die Bewegung des Arbeitshubs unterteilt sich in die Phase Arbeitshub schließen vor dem Schweißvorgang sowie Arbeitshub öffnen nach dem Schweißvorgang.
- Druckaufbau und Schweißen, wobei sich eine dem Antriebsdruck proportionale Elektrodenkraft einstellt. Die Einrichtung dieser Arbeitsphase bewirkt, daß die bereits unmittelbar vor dem Werkstück positionierten Schweißelektroden keine Beschleunigungsphase mehr während des Druckaufbaus durchlaufen, wodurch der Elektrodenverschleiß klein gehalten wird.

Es ist nicht erforderlich, für jeden Schweißvorgang sämtliche für die vorgenannten Arbeitsphasen erforderlichen Solldaten vorzuwählen, sondern in der Regel genügt es, die jeweiligen Vorhub- und Arbeitshubpositionen einzugeben während die übrigen Solldaten bzw. Regelparameter für jede einzelne Phase optimiert werden können.

Stand der Technik ist, daß sich der mittlere Druck normalerweise zu etwa 50 % des zur Verfügung stehenden, im Netz anliegenden Versorgungsdrucks bei Positioniersteuerungen ergibt. Er kann durch Justage des Nullpunktes der Servoventile des Antriebs in gewissen Grenzen verändert werden.

Der Druckluftverbrauch sowie die gesamte Schweißzeit für einen Schweißzyklus läßt sich dadurch erheblich vermindern, daß das Zangenprogramm den Positionierdruck durchgehend aktiv beeinflußt und während des Arbeitshubs in den Bereich des geforderten Schweißdrucks, während längerer Zangenbewegung hingegen auf ein niedrigeres Niveau bringt.

Die gesamte Schweißzeit, das ist die Summe der Einzelzeiten für den Vorhub, den Arbeitshub sowie den Druckaufbau läßt sich im Wesentlichen nur noch über die Zeit für den Druckaufbau verkürzen, da die Zeiten für den Vor- bzw. Arbeitshub ab einem gewissen Mindestweg direkt proportional zu dem zurückzulegenden Weg sind. Die Zeit für den Druckaufbau wiederum ist abhängig von der Druckdifferenz zwischen dem Positionierdruck und dem für die Schweißung geforderten Schweißdruck.

Da das in die Regelung integrierte Zangenprogramm in der Lage ist, den Positionierdruck in den Bereich des geforderten Schweißenddrucks zu bringen, kann die Zeit für den Druckaufbau fast beliebig klein gemacht werden. Dies ist deshalb möglich, weil beim Übergang vom Arbeitshub zum Druckaufbau und Schweißen der aktuelle Druck auf der in Bewegungsrichtung vorderen Seite des Zylinders wegen des wesentlich kleineren Volumens von untergeordneter Bedeutung ist.

Eine weitere Verkürzung der Schweißzeit läßt sich mit der erfindungsgemäßen Regelung dadurch erzielen, daß durch Wahl geeigneter Positionen für beispielsweise ARBHUB_ZUR, ARBHUB_VOR, die Bewegungszeit für den jeweils erforderlichen Schweißvorgang minimiert wird.

Die für die Regelung erforderliche Aufnahme der Istdaten des Schweißvorganges erfolgt in vorteilhafter Ausgestaltung der Erfindung mit Meßwertaufnehmern für die Erfassung der Position des Antriebs sowie des Zangendrucks. Die Position des Antriebs wird vorzugsweise durch einen Widerstandsgeber absolut analog erfaßt und der Rechnereinheit der Regelung über einen AD-Wandler zugeleitet. Durch die Verwendung einer sogenannten elektronischen Lupe läßt sich die Wegauflösung der Positionserfassung für vorwählbare Abschnitte der Bewegung des Antriebs erheblich steigern. Damit lassen sich Auflösungen im Bereich von etwa einhundertstel Millimeter erzielen was eine äußerst genaue Positionierung des Antriebs erlaubt und darüber hinaus auch eine Messung des Schweißdrucks über die Verformung des Schweißzangenarms. Darüber hinaus läßt sich beispielsweise auch eine Blechdickemessung vor und während der Schweißung oder auch eine Messung des Elektrodenverschleißes mit hoher Genauigkeit durchführen.

Die Erfassung des Drucks ermöglicht im Zusammenhang mit dem Zangenprogramm die genaue Berechnung des Zeitpunktes für das Schweißen, so daß die beim Stand der Technik in Folge des zu frühen Schweißens auftretende Spritzerbildung praktisch vollkommen entfällt.

Eine weitere Verkürzung der Zykluszeit für einen Schweißvorgang läßt sich durch einen während des Vor- und/oder Arbeitshubs wirksamen adaptiven Softwareregler mit einer Geschwindigkeitaufschaltung erzielen.

In vorteilhafter Ausgestaltung der Erfindung läßt sich während des Schweißvorganges der Druck ändern, so daß sich beispielsweise auch Aluminiumbleche, die mit zunehmender Erhitzung zum Erweichen neigen, unter kontinuierlicher Rücknahme des Drucks schweißen lassen.

In weiterer Ausgestaltung der Erfindung besitzt die Regelung eine auf den Antrieb der Schweißelektroden, vorzugsweise einen pneumatischen beidseitig beaufschlagbaren Zylinder, wirkende Einschaltdämpfung. Eine derartige Einschaltdämpfung verbessert das Verhalten der Regelungsanordnung beim erstmaligen Einschalten. Das Problem beim erstmaligen Einschalten, insbesondere bei Verwendung eines pneumatischen, beidseitig beaufschlagbaren Zylinders besteht darin, daß in den Zylindern zunächst nur Umgebungsdruck herrscht. Befindet sich der Kolben in der Nähe einer seiner Endlagen, füllt sich das kleinere Volumen des beidseitig beaufschlagbaren Zylinders schneller mit Luft als die Gegenseite, so daß es zu starken, unkontrollierten Bewegungen des Kolbens und der Kolbenstange kommt, bis sich auf beiden Seiten der notwendige Positionierdruck eingestellt hat. Eine Durchflußbegrenzung der Servoventile dämpft den Kolben während des Einschaltvorganges. Die Dämpfung der Servoventile kann dabei sowohl mechanisch, als auch elektronisch erfolgen, indem das elektrische Ansteuersignal, sei es durch das auf der Rechnereinheit laufende Programm oder auch durch andere geeignete Mittel auf einen kleineren als den Höchstwert für das elektrische Ansteuersignal der Servoventile beschränkt wird. Die Dämpfung wird dabei nur so lange beibehalten, bis sich die Regelung stabilisiert hat. Sodann wird der volle Durchfluß der Servoventile wieder freigegeben.

Die beim schnellen Positionieren des Zylinders auftretenden Beschleunigungs- und Bremskräfte führen insbesondere bei Scherenzangen zu mechanischen Schwingungen der gesamten Zange in ihrer Aufhängung an dem Roboter. Um diese unerwünschten Schwingungen zu vermeiden, wird in weiterer Ausgestaltung der Erfindung vorgeschlagen, eine auf den Antrieb der Schweißelektroden, vorzugsweise einen pneumatischen beidseitig beaufschlagbaren Zylinder, wirkende Endlagendämpfung vorzusehen. Bei dieser Endlagendämpfung wird in einem frei über das Zangenprogramm vorwählbaren Abstand von der ebenfalls frei vorwählbaren Endlage der Durchfluß durch die Servoventile (3, 4) vorzugsweise stetig ausgehend vom maximalen Durchfluß, reduziert, um sodann mit reduziertem Durchfluß durch die Servoventile die Endlage der Kolbenstange auszupositionieren. Dabei ist es ohne weiteres möglich, verschiedene Endlagen und die zugehörigen Verläufe der Durchflußreduktion, die sich aus der Abnahme des Durchflusses über die Zeit ergeben, unabhängig voneinander über das Zangenprogramm vorzuwählen.

Schweißzangen werden in Verbindung mit Widerstandsschweißsteuerungen eingesetzt. Regelmäßig besitzen diese Widerstandsschweißsteuerungen eine automatische Zählung der Anzahl der Schweißungen. Nach einer empirisch ermittelten Anzahl von Schweißungen wird automatisch ein höherer Schweißstrom eingestellt, um den durch den Elektrodenverschleiß entstandenen höheren Widerstandswert beim Widerstandsschweißen zu kompensieren. Ein der Veränderung des Schweißstroms entsprechendes Signal wird in weiterer Ausgestaltung der Erfindung der Rechnereinheit als Ist-Datum zugeführt, die in Abhängigkeit dieses elektrischen Signals die dem Antriebsdruck proportionale Elektrodenkraft mit zunehmenden Verschleiß erhöht.

Ein separater Schweißtakter wird überflüssig, wenn die erfindungsgemäße Regelungsanordnung für eine Schweißzange über das Zangenprogramm auch die Stellglieder für den Schweißstrom ansteuert. Alle für den Schweißvorgang selbst notwendigen Informationen werden im Zangenprogramm abgespeichert und über digitale oder analoge Steuerleitungen an das separate Stellglied für den Schweißstrom übertragen.

Verschiedene Schweißzangen mit einer erfindungsgemäßen Regelungsanordnung lassen sich von einer zentralen Stelle aus programmieren, wenn die Rechnereinheiten der Regelungsanordnungen in einem Netzwerk betrieben werden.

Eine Verringerung des Programmieraufwandes läßt sich durch Zusammenfassen unveränderlicher Solldaten des Schweißvorganges, insbesondere hinsichtlich der Bewegung der Schweißelektroden in sämtlichen Einzelphasen in einem Grundprogramm erzielen, das durch gezielten Aufruf in der Rechnereinheit generiert werden kann, so daß schließlich nur noch die jeweils veränderlichen Solldaten, wie beispielsweise der Zangendruck oder die Endlagen der Elektroden als Solldaten eingegeben werden müssen.

Vor dem Schweißen muß an den Schweißelektroden der erforderliche Druck aufgebaut werden, wobei sich eine dem Antriebsdruck proportionale Elektrodenkraft einstellt. Um optimale Schweißergebnisse zu erzielen, ist die Kenntnis der Elektrodenkraft von Interesse. Herkömmlicherweise kann die Elektrodenkraft durch Messungen mit Dehnmeßstreifen oder anderen Kraftsensoren ermittelt und als Ist-Datum des Schweißvorganges in der Regelungsanordnung verwendet werden. Diese Art der Kraftmessungen sind jedoch aufwendig. Im Zusammenhang mit der erfindungsgemäßen Regelungsanordnung hat sich herausgestellt, daß bei Schweißzangen die Elektrodenarme aufgrund ihrer Elastizität eine meßbare Verbiegung durch den Kraftaufbau zwischen den Schweißelektroden erfahren. Diese Verbiegung resultiert in einem definierten Nachsetzverhalten der Elektroden während des Druck- beziehungsweise Kraftaufbaus. Dieser Effekt wird in der Regelungsanordnung einer Schweißzange erfindungsgemäß dadurch genutzt, daß die Elektrodenkraft über die zu ihr proportionale Biegung der Arme der Schweißzange, aus der Erfassung der Position des Antriebs über die Zeit in der Rechnereinheit errechenbar ist. Zwar verhält sich die Verbiegung der Elektrodenarme nicht linear zu der tatsächlich anliegenden Elektrodenkraft, sie ist jedoch proportional und damit für jede Zange eich- und damit reproduzierbar. Aus einer entsprechend aufgenommenen Eichkurve kann somit aus der Frfassung der Position des Antriebs für die Schweißelektroden über die Zeit, die ohnehin als Ist-Datum erfaßt wird, auch noch die Elektrodenkraft ermittelt werden.

In weiterer Ausgestaltung der Erfindung ist die Regelung für eine Schweißzange in einem Modul zusammengefaßt, das in der Nähe oder an der Schweißzange angebracht ist.

Herkömmliche Schweißzangen lassen sich ohne weiteres mit der erfindungsgemäßen Regelung nachrüsten.

Nachfolgend wird die Erfindung anhand eines Ausführungsbeispieles des näheren erläutert.

Es zeigen:
- **Figur 1**: ein schematisches Blockschaltbild einer erfindungsgemäßen Regelung für eine Schweißzange
- **Figur 2**: eine perspektivische Ansicht einer Schweißzange mit einer erfindungsgemäßen Regelung,
- **Figur 3**: den Druckverlauf und die Position des servoventilgesteuerten Antriebs,
- **Figur 4**: Diagramme zur Illustration der Umschaltung von der Positions- auf die Druckregelung, sowie
- **Figur 5**: ein Diagramm mit angehobenem Positionierdruck

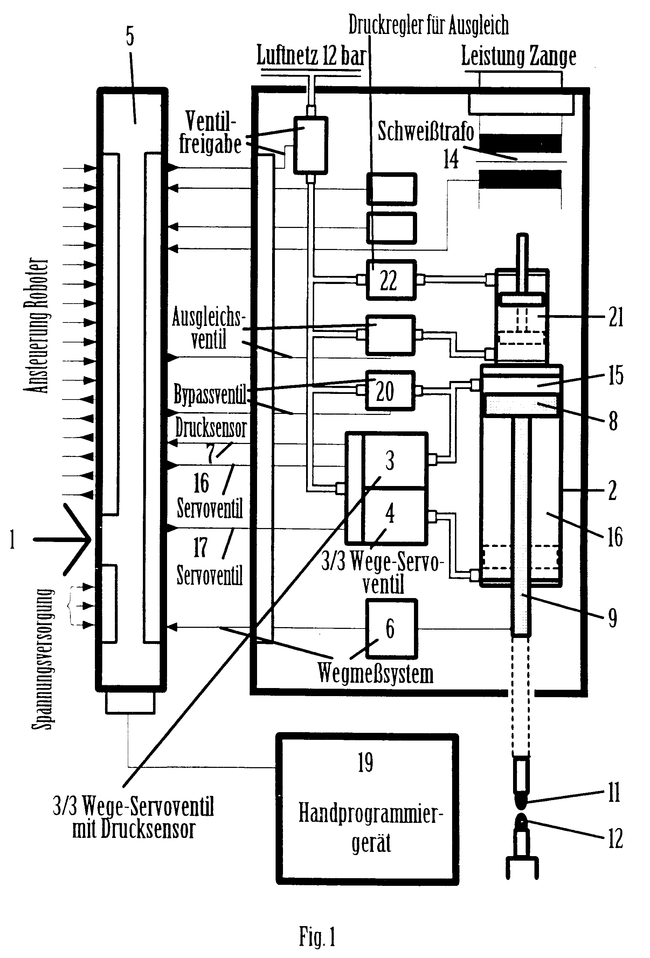

Figur 1 zeigt eine insgesamt mit 1 bezeichnete Regelung für eine Schweißzange, insbesondere für den Einsatz an einem in der Zeichnung nicht dargestellten Schweißroboter, die im wesentlichen aus einem als Antrieb dienenden Zylinder 2, zwei den Zylinder 2 steuernden Servoventilen 3 bzw. 4, einer Rechnereinheit 5 sowie Meßwertaufnehmern 6 und 7 besteht.

Der in dem Zylinder 2 geführte Kolben 8 mit einer Kolbenstange 9 weist stirnseitig eine Elektrode 11 auf, die in Richtung der Gegenelektrode 12 verfahrbar ist.

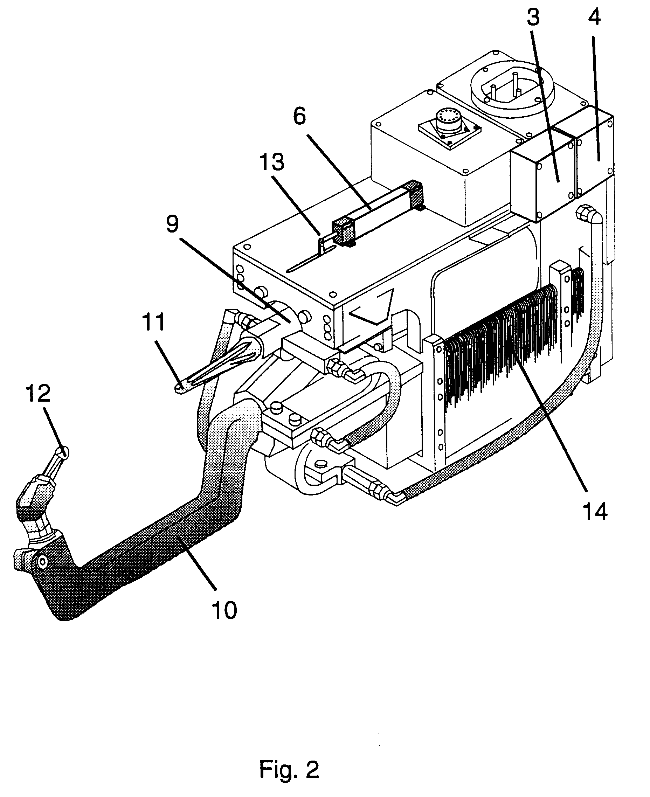

Die Gegenelektrode 12 ist wie aus Figur 2 weiter ersichtlich an einem geringfügig nachgiebig angeordneten Schweißarm 10 angebracht, der aufgrund seiner im wesentlichen U-förmigen Gestalt das Schweißwerkstück umgreifen kann.

Wie weiter aus Figur 2 ersichtlich, ist der Meßwertaufnehmer 6 für die Position der Kolbenstange 9 auf dem Gehäuse der Schweißzange angeordnet und über ein Gestänge 13 mit der Kolbenstange 9 des Zylinders 2 verbunden.

Weiter ist in Figur 2 der Schweißtransformator 14 für den notwendigen Schweißstrom sowie die Anordnung der Servoventile 3 und 4 auf dem Gehäuse der Schweißzange zu erkennen.

Die Funktionsweise der erfindungsgemäßen Regelung läßt sich am besten anhand von Figur 1 erläutern. Der Meßwertaufnehmer 6 erfaßt die aktuelle Position der Kolbenstange 9 des Zylinders 2 und leitet ein entsprechendes analoges Signal im Bereich zwischen 0 und 10 Volt an die Rechnereinheit 5.

Am Servoventil 3 wird der aktuelle Druck der hinteren Kammer 15 des Zylinders 2 erfaßt und ebenfalls zur Rechnereinheit 5 weitergeleitet. Dort findet ein Soll/Istvergleich mit den zuvor über ein Handprogrammiergerät 19 eingegebenen Solldaten für den Schweißvorgang statt. Signale 16, 17 von der Rechnereinheit 5 an die Servoventile 3, 4 steuern dann entsprechend dem auf der Rechnereinheit 5 laufenden Zangenprogramm die Bewegung des Zylinders 2.

Aufgrund dieser Anordung ist mittels des Zangenprogramms die an der Spitze der Kolbenstange 9 angebrachte Elektrode 11 nach den frei vorprogrammierbaren Schweißdaten verfahrbar.

Mit Hilfe der Regelung läßt sich der Zangenschließweg je nach Anwendungsfall verkürzen und die pneumatische Beschaltung des Zylinders optimal regeln, so daß sich die Zangenschließzeit auf bis zu 40 Millisekunden verkürzen läßt.

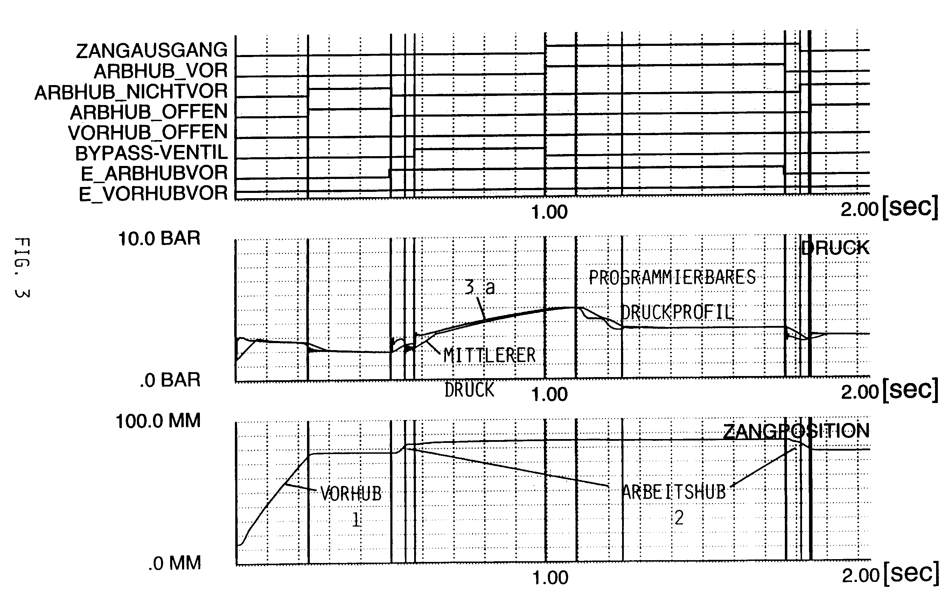

Über das Zangenprogramm ist die Bewegung des Kolbens 8 sowie der Kolbenstange 9 in folgende, über die Programmierung des Zangenprogramms frei vorwählbare und/oder optimierbare Abschnitte aufgeteilt: (vergleiche Diagramm "Position" in Figur 3)
Phase 1: Vorhub-schließen, wobei damit die Bewegung der Schweißelektrode 11 in Richtung der Gegenelektrode 12 gemeint ist.
Phase 2: Arbeitshub schließen, wobei damit die Bewegung der Schweißelektrode 11 bis an das Werkstück heran gemeint ist jedoch ohne dieses zu berühren.
Phase 3 a: Druckaufbau, wie dies aus dem Diagramm "Druck" ersichtlich ist.

Über das Zangenprogramm und entsprechende Ansteuerung der Servoventile 3, 4 läßt sich dabei die Geschwindigkeit des Druckaufbaus und die Höhe des Drucks genau einstellen.

Nach der Phase des Druckaufbaus und des anschließenden Schweißens schließen sich die Phasen Arbeitshub öffnen sowie Vorhub öffnen in umgekehrter Reihenfolge an.

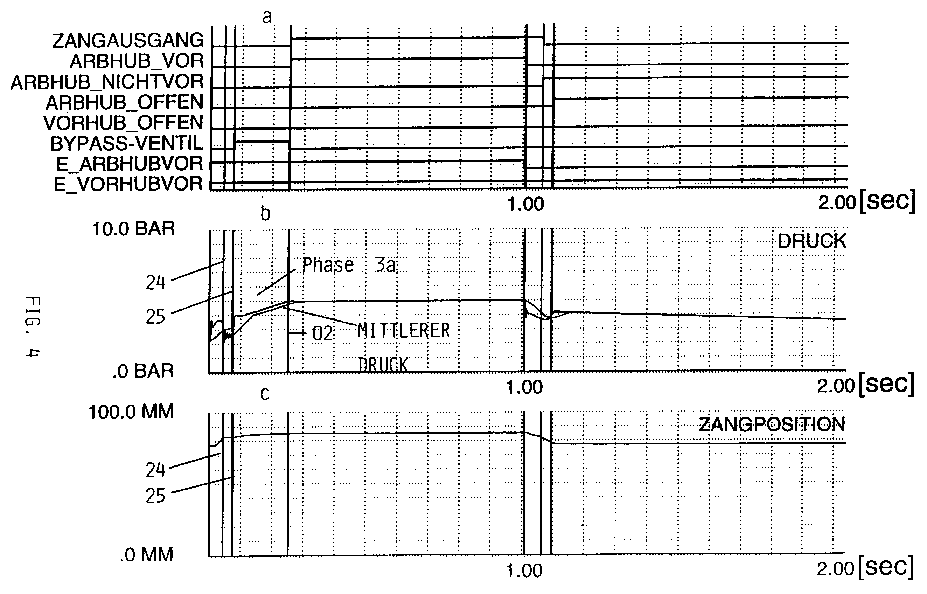

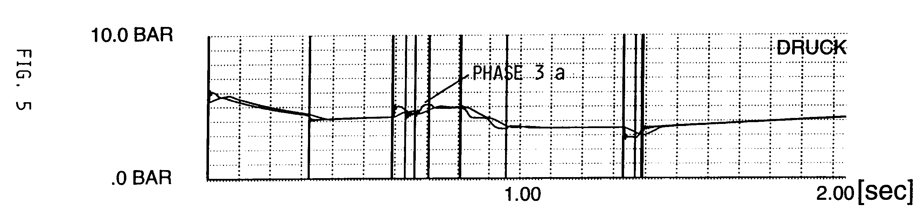

Wie aus dem Diagramm "Druck" in Figur 5 ersichtlich bringt das Zangenprogramm den Positionierdruck während der gesamten Bewegung in den Bereich des geforderten Schweißenddrucks. Zum Vergleich wird auf Figur 4 b) Phase 3a) verwiesen, wo der Positionierdruck nicht angehoben ist.

Anhand von Figur 4 wird nachfolgend die Umschaltung von der Phase 2 (Arbeitshub) auf die Phase 3 (Druckaufbau) erläutert. Im einzelnen zeigt Figur 4 in nachfolgender Reihenfolge die Signalfolge von der Rechnereinheit 5 an die Ansteuerung des Roboters über die Zeit (a), den gemessenen Druck in der hinteren Kammer 15 des Zylinders 2 sowie den mittleren Druck (b), die am Weggeber 6 gemessene Position der Kolbenstange 9 des Zylinders (c).

Zur Zeit t = 0 Sekunden startet die Phase Arbeitshub schließen durch das am Eingang der Rechnereinheit 5 anliegende Signal E_Vorhub Vor= 1 und E_Arbhub Vor= 1. Das Servoventil 3 gibt für 45 Millisekunden die Luft frei und die Stange 9 bewegt sich bis an das Werkstück heran, jedoch ohne dieses zu berühren. Das Servoventil 4 wird entsprechend zum Servoventil 3 angesteuert.

Die Phase Arbeitshub schließen endet an der in sämtlichen Diagrammen mit der senkrechten Linie 24 gekennzeichneten Stelle. Die Phase 2 schaltet dann auch die Geschwindigkeitsaufschaltung ab und es läuft eine über das Zangenprogramm vorgewählte Wartezeit von 20 Millisekunden ab. Gleichzeitig bewegt sich die Kolbenstange 9 und damit die Elektrode 11 langsam weiter in Richtung des Schweißwerkstückes. Währenddessen wird optional bereits damit begonnen, über das Servoventil 4 die vordere Kammer 16 des Zylinders 2 zu entlüften.

Mit Beginn der durch die senkrechte Linie 25 markierten Druckaufbauphase fängt die Umstellung auf die Druckregelung mittels des auf der Rechnereinheit 5 laufenden Zangenprogramms an. Ein Softwareregler für den Soll/Istvergleich des Drucks sorgt für einen schnellen Druckanstieg, was aus dem Verlauf der Druckkurve im Diagramm (b) unmittelbar nach Beginn der Druckaufbauphase erkennbar ist. Das Servoventil 4 ist in dieser Phase voll geöffnet.

Gegebenenfalls kann zu dem Servoventil 3 in dieser Phase ein Bypassventil 20 zugeschaltet werden, um die Luftmenge in der hinteren Kammer 15 zu erhöhen und die Schließzeit weiter zu verringern.

Nach 0,212 Sekunden, in den Diagrammen durch die senkrecht verlaufende Linie 02 gekennzeichnet, wird eine über das Zangenprogramm programmierbare Grenze, z.B. von etwa 90% des zu erreichenden Schweißenddrucks von im vorliegenden Fall 4,98 bar überschritten. Die entsprechenden Kontrollsignale für die Schweißstromsteuerung werden gesetzt, so daß nun ohne weitere Vorpreßzeit geschweißt werden kann. Das Bypassventil ist nunmehr abgeschaltet (a).

Der für den Zangenausgleich vorgesehene Zylinder 21 wird über einen als Servoventil ausgebildeten Druckregler 22 mit dem Druckluftnetz verbunden.

In vorteilhafter Ausgestaltung der Erfindung wird auch die von dem Zylinder 21 ausgeübte Kraft von dem auf der Rechnereinheit 5 laufenden Zangenprogramm aktiv beeinflußt.

## Patentansprüche

1. Regelungsverfahren für eine Regelungsanordnung einer Schweißzange, insbesondere für den Einsatz an einem Schweißroboter,
- mit einem servoventilgesteuerten pneumatischem Zylinder als Antrieb für die Schweißelektroden und einer elektronischen Steuerung für Servoventile,
- mit mindestens einen Meßwertaufnehmer (6) für Istdaten des Schweißvorgangs sowie einer Schnittsteile für die Meßwerte zu einer Rechnereinheit (5),
- mit einem auf der Rechnereinheit (5) laufenden Zangenprogramm, mit dem die Solldaten des Schweißvorgangs frei vorwählbar sind,
- und einer Signale von der Rechnereinheit an die Servoventile leitenden Schnittstelle (16,17),
dadurch gekennzeichnet
daß der pneumatische Zylinder 2 eine hintere und eine vordere Kammer (15, 16) aufweist, die von zwei unabhängig ansteuerbaren Servoventilen (3,4) gesteuert werden, wobei das eine Servoventil mit der vorderen und das andere Servoventil mit der hinteren Kammer 15, 16 verbunden ist,
daß die Bewegung des pneumatischen Zylinders (2) für die Schweißelektroden in folgende, über die Programmierung des Zangenprogramms frei vorwählbare und/oder optimierbare Abschnitte aufgeteilt ist:
- Vorhub öffnen-/schließen, wobei damit diejenige Bewegung der Schweißelektroden zwischen einer geöffneten Position (VORHUB_ZUR) in Richtung auf das Schweißwerkstück gemeint ist, die jedoch in geringem Abstand (VORHUB_VOR) davor endet und umgekehrt,
- Arbeitshub öffnen-/schließen , wobei damit diejenige Bewegung der Schweißelektroden zwischen der Position VORHUB_VOR bis an das Werkstück heran gemeint ist, jedoch ohne dies zu berühren (Position ARBHUB_VOR) und umgekehrt
- Druckaufbau und Schweißen, wobei sich eine dem Luftdruck in den Kammern (15, 16) des pneumatischen Zylinders (2) proportionale Elektrodenkraft einstellt
und daß das Zangenprogramm die Servoventile so ansteuert, daß der Positionierdruck während des Arbeitshubs in den Bereich des geforderten Schweißdrucks und während längerer Zangenbewegungen auf niedrigeres Niveau gebracht wird.

2. Regelungsverfahren nach Anspruch 1, gekennzeichnet durch einen Meßwertaufnehmer für die Erfassung der Position (6) der Kolbenstange 9 des pneumatischen Zylinders 2 sowie des Zangendrucks (7), der vorzugsweise am Servoventil (3) der hinteren Kammer (15) des pneumatischen Zylinders (2) erfaßt wird.

3. Regelungsverfahren nach Anspruch 1 oder 2, dadurch gekennzeichnet, daß der Meßwertaufnehmer für die Erfassung der Position der Kolbenstange ein Widerstandsgeber ist.

4. Regelungsverfahren nach Anspruch 2 oder 3, dadurch gekennzeichnet, daß die Auflösung der Positionserfassung für vorwählbare Abschnitte der Bewegung des Antriebs vorzugsweise mittels einer elektronischen Lupe erhöht wird.

5. Regelungsverfahren nach einem der Ansprüche 1-4, gekennzeichnet durch pneumatische 3/3-Wege Servoventile (3,4).

6. Regelungsverfahren nach einem der Ansprüche 1-5, dadurch gekennzeichnet, daß die Programmierung über ein Handprogrammiergerät (19) erfolgt.

7. Regelungsverfahren nach einem der Ansprüche 1-6, dadurch gekennzeichnet, daß während des Vor- und/oder Arbeitshubs ein Softwareregler mit einer Geschwindigkeitsaufschaltung wirksam ist.

8. Regelungsverfahren nach einem der Ansprüche 1 -7, dadurch gekennzeichnet, daß während des Abschnitts Schweißen den Druck geändert wird.

9. Regelungsverfahren nach einem der Ansprüche 1-8, dadurch gekennzeichnet, daß das Zangenprogramm variable Kennlinienkorrekturen für die Servoventile verwaltet.

10. Regelungsverfahren nach einem der Ansprüche 1-9, dadurch gekennzeichnet, daß die gesamte Elektronik der Rechnereinheit auf einer Leiterkarte zusammengefaßt ist und zusammen mit den übrigen Bestandteilen der Regelung in der Nähe oder an der Schweißzange angebracht ist.

11. Regelungsverfahren nach einem der Ansprüche 1 - 10, dadurch gekennzeichnet, daß die von dem Ausgleichszylinder (21) der Schweißzange ausgeübte Kraft von dem auf der Rechnereinheit laufenden Zangenprogramm aktiv beeinflußt wird.

12. Regelungsverfahren nach Ansprüchen 10 oder 11, gekennzeichnet durch eine auf den pneumatischen, beidseitig beaufschlagbaren Zylinder, wirkende Einschaltdämpfung.

13. Regelungsverfahren nach Anspruch 12, gekennzeichnet durch eine beim Einschalten wirksame Durchflußbegrenzung der Servoventile (3, 4), als Einschaltdämpfung.

14. Regelungsverfahren nach einem der Ansprüche 11 -13, gekennzeichnet durch eine auf den pneumatischen, beidseitig beaufschlagbaren Zylinder wirkende Endlagendämpfung.

15. Regelungsverfahren nach Anspruch 14, dadurch gekennzeichnet, daß in einem frei über das Zangenprogramm vorwählbaren Abstand von der ebenfalls frei vorwählbaren Endlage der Durchfluß durch die Servoventile (3,4), vorzugsweise stetig ausgehend vom maximalen Durchfluß reduziert wird und mit reduziertem Durchfluß durch die Servoventile die Endlage auspositioniert wird.

16. Regelungsverfahren nach Anspruch 15, dadurch gekennzeichnet, daß die zu verschiedenen Endlagen zugehörigen Verläufe der Durchflußreduktionen unabhängig voneinander über das Zangenprogramm vorwählbar sind.

17. Regelungsverfahren nach einem der Ansprüche 1 - 16, dadurch gekennzeichnet, daß der Rechnereinheit als Ist-Datum ein vom Verschleiß der Schweißelektroden abhängiges elektrisches Signal zugeführt wird und die Rechnereinheit in Abhängigkeit des elektrischen Signals die dem Antriebsdruck proportionale Elektrodenkraft einstellt.

18. Regelungsverfahren nach einem der Ansprüche 1 - 17, dadurch gekennzeichnet, daß das Zangenprogramm Stellglieder für den Schweißstrom ansteuert.

19. Regelungsverfahren nach einem der Ansprüche 1 - 18, dadurch gekennzeichnet, daß die Rechnereinheit in einem Netzwerk vorzugsweise mit Rechnereinheiten identischer Regelungsanordnungen betrieben wird.

20. Regelungsverfahren nach einem der Ansprüche 1 - 19, gekennzeichnet durch eine Zusammenfassung und Ablage von unveränderlichen Solldaten des Schweißvorganges, insbesondere der Bewegung der Schweißelektroden in einem auf der Rechnereinheit generierbaren Grundprogramm, so daß nur noch die veränderlichen Solldaten vorgewählt werden müssen.

21. Regelungsverfahren nach einem der Ansprüche 2 - 20, dadurch gekennzeichnet, daß die Elektrodenkraft über die zu ihr proportionale Durchbiegung der Schweißzangenarme, aus der Erfassung der Position der Kolbenstange des Antriebs über die Zeit in der Rechnereinheit errechnet wird.

## Claims

1. Control method for a control arrangement of a welding electrode holder, in particular for use in a welding robot,
- having a pneumatic cylinder controlled by servovalves as drive for the welding electrodes, and an electronic control system for servovalves,
- having at least one measured value pick-up (6) for actual data of the welding process and an interface, for the measured values, to a computer unit (5),
- having a holder program, running on the computer unit (5), with which the desired data of the welding process are freely selectable,
- and an interface (16,17) leading signals from the computer unit to the servovalves,
characterized
in that the pneumatic cylinder 2 has a rear and a front chamber (15,16), which are controlled by two independently actuable servovalves (3,4), one servovalve being connected to the front chamber (15) and the other servovalve being connected to the rear chamber 16,
in that the movement of the pneumatic cylinder (2) for the welding electrodes is subdivided into the following sections which may be freely selected and/or optimized via the programming of the holder program:
- approach stroke open/close, this meaning that movement of the welding electrodes between an open position (VORHUB_ZUR) in the direction towards the welding workpiece, said, movement, however ending at a short distance (VORHUB_VOR) in front thereof, and vice versa,
- working stroke open/close, this meaning that movement of the welding electrodes between the position VORHUB_VOR up to the workpiece, but without contacting the latter (Position ARBHUB_VOR), and vice versa,
- pressure build-up and welding, an electrode force which is proportional to the air pressure in the chambers (15,16) of the pneumatic cylinder (2) being established,
and in that the holder program actuates the servovalves in such a way that the positioning pressure is brought into the range of the required welding pressure during the working stroke and is brought to a lower level during relatively long holder movements.

2. Control method according to Claim 1, characterized by a measured value pick-up for the acquisition of the position (6) of the piston rod 9 of the pneumatic cylinder 2 and of the holder pressure (7), which is preferably acquired at the servovalve (3) of the rear chamber (15) of the pneumatic cylinder (2).

3. Control method according to Claim 1 or 2, characterized in that the measured value pick-up for the acquisition of the position of the piston rod is a resistive transmitter.

4. Control method according to Claim 2 or 3, characterized in that the resolution of the position acquisition for preselectable sections of the movement of the drive is increased, preferably by means of an electronic magnifier.

5. Control method according to one of Claims 1-4, characterized by pneumatic 3/3-way servovalves (3,4).

6. Control method according to one of Claims 1-5, characterized in that the programming is carried out via a hand-held programming device (19).

7. Control method according to one of Claims 1-6, characterized in that, during the approach and/or working stroke, a software controller having rate feedback is effective.

8. Control method according to one of Claims 1-7, characterized in that, during the welding section, the pressure is changed.

9. Control method according to one of Claims 1-8, characterized in that the holder program administers variable characteristic curve corrections for the servovalves.

10. Control method according to one of Claims 1-9, characterized in that all of the electronics of the computer unit are combined on one printed circuit board and, together with the remaining components of the control system, are fitted in the vicinity of or on the welding holder.

11. Control method according to one of Claims 1-10, characterized in that the force exerted by the compensating cylinder (21) of the welding holder is actively influenced by the holder program running on the computer unit.

12. Control method according to Claim 10 or 11, characterized by cut-in damping which is active on the pneumatic, double-acting cylinder.

13. Control method according to Claim 12, characterized by a limiting of the flow through the servovalves (3,4), which is active during cut-in, as cut-in damping.

14. Control method according to one of Claims 11-13, characterized by an end-position damping which is active on the pneumatic, double-acting cylinder.

15. Control method according to Claim 14, characterized in that, at a distance which may be pre-selected freely via the holder program from the likewise freely pre-selectable end position, the flowthrough the servovalves (3,4) is reduced, preferably continuously, starting from the maximum throughflow, and the final position is achieved with reduced flow through the servovalves.

16. Control method according to Claim 15, characterized in that the profiles, associated with various end positions, of the reductions in throughflow are preselectable independently of one another via the holder program.

17. Control method according to one of Claims 1-16, characterized in that the computer unit is fed, as current data item, an electric signal which depends on the wear of the welding electrodes, and the computer unit sets the electrode force, which is proportional to the drive pressure, as a function of the electric signal.

18. Control method according to one of Claims 1-17, characterized in that the holder program actuates actuating elements for the welding current.

19. Control method according to one of Claims 1-18, characterized in that the computer unit is operated in a network, preferably with computer units of identical control arrangements.

20. Control method according to one of Claims 1-19, characterized by a combination and storage of invariant desired data of the welding process, in particular of the movement of the welding electrodes in a basic program which can be generated on the computer unit, so that only the variable desired data still have to be pre-selected.

21. Control method according to one of Claims 2-20, characterized in that the acquisition of the position of the piston rod of the drive over time is used in the computer unit to calculate the electrode force via the bending, proportional to said force, of the welding holder arms.

## Revendications

1. Procédé de régulation pour un dispositif de régulation d'une pince pour des électrodes de soudage, en particulier pour l'utilisation dans un robot à souder,
- présentant un cylindre pneumatique commandé par servosoupape comme dispositif d'entraînement pour des électrodes de soudage et une commande électronique pour des servosoupapes,
- présentant au moins un capteur de mesures (6) pour les données instantanées du processus de soudage ainsi qu'une interface pour acheminer les valeurs de mesure vers une unité de calcul (5),
- présentant un programme de pinces tournant sur l'unité de calcul (5) et permettant de choisir librement au préalable les valeurs de consigne du processus de soudage,
- et une interface (16, 17) permettant d'acheminer les signaux de l'unité de calcul vers les servosoupapes,
caractérisé
en ce que le cylindre pneumatique (2) présente une chambre antérieure et une chambre postérieure (15, 16) qui sont commandées par deux servosoupapes (3, 4) pouvant être commandées indépendamment, une servosoupape étant reliée à la chambre antérieure et l'autre servosoupape à la chambre postérieure (15, 16),
en ce que le mouvement du cylindre pneumatique (2) pour les électrodes de soudage est divisé en les sections suivantes, qui peuvent être choisies et/ou optimisées librement au préalable via la programmation du programme des pinces:
- une course d'ouverture/fermeture, le mouvement étant ici celui des électrodes de soudage entre une position ouverte (COURSE_VERS) vers la pièce à souder qui s'arrête toutefois à une faible distance de la pièce (COURSE_DEVANT) et inversement,
- une course de travail d'ouverture/fermeture, le mouvement étant ici celui des électrodes de soudage entre la position COURSE_DEVANT jusqu'à ce qu'elles soient placées près la pièce, toutefois sans la toucher (position COURSETRAV_DEVANT) et inversement
- une mise sous pression et soudage, la force d'électrodes qui est appliquée étant proportionnelle à la pression de l'air dans les chambres (15, 16) du cylindre pneumatique (2)
et en ce que le programme de pinces commande les servosoupapes de telle manière que la pression de positionnement pendant la course de travail est amenée dans la plage de pression de soudage nécessaire et qu'elle est ramenée à un niveau plus bas pendant des mouvements de pinces plus longues.

2. Procédé de régulation selon la revendication 1, caractérisé par un capteur de mesures pour l'enregistrement de la position (6) de la tige (9) du piston du cylindre (2) pneumatique ainsi que de la pression (7) exercée par les pinces, qui est de préférence enregistrée au niveau de la servosoupape (3) de la chambre postérieure (15) du cylindre pneumatique (2).

3. Procédé de régulation selon la revendication 1 ou 2, caractérisé en ce que le capteur de mesure pour l'enregistrement de la position de la tige du piston est un indicateur de résistance.

4. Procédé de régulation selon la revendication 2 ou 3, caractérisé en ce que la résolution de l'enregistrement de la position pour des sections pouvant être choisies au préalable du mouvement du dispositif d'entraînement est de préférence augmentée à l'aide d'une loupe électronique.

5. Procédé de régulation selon une quelconque des revendications 1 à 4, caractérisé par des servosoupapes (3, 4) pneumatiques à 3/3 voies.

6. Procédé de régulation selon une quelconque des revendications 1 à 5, caractérisé en ce que la programmation est effectuée via un appareil programmable à la main (19).

7. Procédé de régulation selon une quelconque des revendications 1 à 6, caractérisé en ce qu'un régulateur fonctionnant par logiciel avec un commutateur de la vitesse est actif pendant la course avant et/ou la course de travail.

8. Procédé de régulation selon une quelconque des revendications 1 à 7, caractérisé en ce que la pression est modifiée pendant la section soudage.

9. Procédé de régulation selon une quelconque des revendications 1 à 8, caractérisé en ce que le programme des pinces met à jour des corrections variables des courbes caractéristiques pour les servosoupapes.

10. Procédé de régulation selon une quelconque des revendications 1 à 9, caractérisé en ce que l'ensemble des dispositifs électroniques de l'unité de calcul est rassemblé sur un circuit imprimé et est disposé, avec les autres composants du dispositif de régulation, à proximité de ou sur la pince pour électrodes de soudage.

11. Procédé de régulation selon une quelconque des revendications 1 à 10, caractérisé en ce que la force exercée par le cylindre de compensation (21) de la pince pour électrodes de soudage est influencée activement par le programme des pinces tournant sur l'unité de calcul.

12. Procédé de régulation selon les revendications 10 ou 11, caractérisé par un amortisseur de démarrage agissant le cylindre pneumatique pouvant être mis sous pression des deux côtés.

13. Procédé de régulation selon la revendication 12, caractérisé par une limitation du débit des servosoupapes (3, 4), active lors du démarrage, comme amortisseur de démarrage.

14. Procédé de régulation selon une quelconque des revendications 11 à 13, caractérisé par un amortisseur de fin de course agissant sur le cylindre pneumatique pouvant être mis sous pression des deux côtés.

15. Procédé de régulation selon la revendication 14, caractérisé en ce qu'à une certaine distance, pouvant être choisie librement au préalable via le programme des pinces, de la position finale, pouvant également être choisie librement au préalable via le programme des pinces, le débit à travers les servosoupapes (3, 4) est réduit, en partant de préférence toujours du débit maximal, et en ce que la position finale est positionnée avec un débit réduit à travers les servosoupapes.

16. Procédé de régulation selon la revendication 15, caractérisé en ce que les allures des réductions de débit correspondant aux différentes positions finales peuvent être choisies au préalable, indépendamment les unes des autres, via le programme des pinces.

17. Procédé de régulation selon une quelconque des revendications 1 à 16, caractérisé en ce qu'on introduit un signal électrique dépendant de l'usure des électrodes de soudage comme donnée instantanée dans l'unité de calcul et en ce que l'unité de calcul règle la force des électrodes proportionnelle à la pression de travail en fonction du signal électrique.

18. Procédé de régulation selon une quelconque des revendications 1 à 17, caractérisé en ce que le programme des pinces commande des éléments de réglage pour le courant de soudage.

19. Procédé de régulation selon une quelconque des revendications 1 à 18, caractérisé en ce que l'unité de calcul fonctionne dans un réseau, de préférence avec des unités de calcul présentant des dispositifs de régulation identiques.

20. Procédé de régulation selon une quelconque des revendications 1 à 19, caractérisé par un rassemblement et une fixation des valeurs de consigne invariables du procédé de soudage, en particulier du mouvement des électrodes de soudage, dans un programme de base pouvant être généré sur l'unité de calcul de telle manière qu'on ne doit plus choisir au préalable que les valeurs de consigne variables.

21. Procédé de régulation selon une quelconque des revendications 2 à 20, caractérisé en ce que la force des électrodes est calculée via le fléchissement des bras des pinces pour électrodes de soudage qui est proportionnel à ladite force, à partir de la détermination de la position de la tige du piston du dispositif d'entraînement en fonction du temps dans l'unité de calcul.
